# FASCICULE DE BREVET EUROPEEN

(11) **EP 3 247 738 B1**
(45) Date de publication et mention de la délivrance du brevet: **13.03.2019**
(21) Numéro de dépôt: 16707830.2
(22) Date de dépôt: 20.01.2016
(51) Int. Cl.: C08J 3/12, A01N 25/00, B29B 9/16

(54) **PROCÉDÉ D'ÉLABORATION D'UN MATÉRIAU COMPOSITE NON POREUX HYDRO- ET/OU LIPO-ABSORBANT DE COMPOSITIONS ACTIVES LIQUIDES**
VERFAHREN ZUR HERSTELLUNG EINES NICHTPORÖSEN WASSERABSORBIERENDEN VERBUNDSTOFFES UND LIPIDABSORBENS FÜR AKTIVE FLÜSSIGE ZUSAMMENSETZUNGEN
METHOD FOR PRODUCING A NON-POROUS COMPOSITE MATERIAL THAT IS WATER-ABSORBENT AND LIPID-ABSORBENT FOR ACTIVE LIQUID COMPOSITIONS

(30) Priorité: 21.01.2015 FR 1500117
(43) Date de publication de la demande: 29.11.2017
(73) Titulaire: AB7 Innovation S.A.S.U., 31450 Deyme (FR)
(72) Inventeur: CHELLE, René, 31450 Deyme (FR); NGUYEN, David, 31400 Toulouse (FR); VILBERT, Arnaud, 31450 Baziège (FR)
(86) Numéro de dépôt international: PCT/FR2016/000007
(87) Numéro de publication internationale: WO 2016/116679

(56) Documents cités:
- EP-A1- 0 575 838
- FR-A1- 2 959 100
- US-A1- 2006 263 326
- US-A1- 2008 293 927

## Description

La présente invention concerne l'élaboration d'un matériau composite biodégradable non poreux hydro- et/ou lipo-absorbant de compositions actives liquides hydrophiles ou lipophiles.

Plus précisément, elle a pour objet un procédé d'élaboration d'un matériau composite biodégradable non poreux rendu hydro- et/ou lipo-absorbant servant à l'obtention d'objets mis en formes diverses pour être chargés à postériori en compositions actives liquides hydrophiles ou lipophiles comprenant au moins un principe actif destiné à être délivré de manière contrôlée et continue dans un milieu.

Des éléments actifs sont couramment apportés dans certains milieux - atmosphère, sol ou eau - par diverses voies : voie aérienne pour les actifs volatils et voie directe par contact pour les actifs sous forme liquide ou solide. Il en est ainsi par exemple pour le contrôle des insectes nuisibles par voie aérienne, pour le traitement des sols agricoles par épandage ou enfouissement, ou encore le traitement des eaux. Pour ce faire, lesdits éléments actifs sont souvent incorporés dans des supports divers pour observer certaines règles environnementales. Lesdits supports, généralement poreux, sont sous formes de granulés ou de pellets chargés d'au moins une substance active à délivrer dans le milieu cible.

En effet, par souci de préservation de la nature contre certains aspects de la pollution environnementale, il est souhaitable de pratiquer une application des principes actifs par libération en dose contrôlée dans le temps.

Les supports de substances actives solides ou liquides du domaine de l'invention sont élaborés de manières variables. Généralement on procède par l'élaboration d'un support poreux dans lequel va être incorporée la composition active. C'est le principe par exemple des inoculums supportés dans de la tourbe broyée. C'est aussi le cas du brevet FR2959100 B1 (22.04.2010) [AB7 Innovation] de la demanderesse qui divulgue un procédé de porosification de granulés de tourteaux biodégradables, afin de les charger en composition liquide lipophile active.

Pour le même objectif qui consiste à rendre une structure poreuse pour qu'elle puisse être absorbante de principes actifs, Nadine LE BOLAY et al. [LGC ENSIACET - INP Toulouse, LCB, CIRIMAT - UMR CNRS,] ont mis au point un procédé de production par co-broyage de matériaux composites poreux biodégradables à usage orthopédique. Ici les principes actifs sont incorporés dans la structure par l'intermédiaire de la charge minérale permettant de moduler l'activité cellulaire après implantation.

Entrent également dans cette catégorie des polymères superabsorbants par leur porosité, mis en suspension pour un usage en agriculture comme divulgué par la demande de brevet international WO2009/014824 A2 (29.01.2009) [ABSORBENT TECHNOLOGIES, INC.], les polymères étant obtenus à base d'amidon et d'amidon greffé.

Si les pores d'absorption peuvent être propres à la structure du matériau lui-même ou en agissant sur un matériau existant, ils sont par contre souvent créés au cours de l'élaboration du matériau. L'homme du métier utilise pour cela des porogènes de natures diverses. Le principe consiste à éliminer lesdits porogènes après la mise en forme des objets à porosifier par diverses techniques adaptées à la nature du porogène utilisé. Dans ce cadre, plusieurs documents, datant au moins des trois dernières décennies, décrivent l'application de ces procédés.

EP0012407 B1 (10.12.1978) [Parmit GmbH Porosierungsmittel für Baustoffindustrie (DE)] décrit un procédé de production d'un agent porogène pour la fabrication d'objets poreux conformés en de la terre glaise ou de l'argile, en mélange avec une matière combustible pulvérulente à finement grenue avec de la mousse puis granulés. Cette technologie basée sur l'usage d'au moins un porogène est également utilisée par l'homme du métier dans différents domaines : EP0140757 A2 (29.09.1983) [HABIA CABLE S.A.] pour la couche isolante de câble coaxial ; EP0784490 B1 (03.10.1995) [Cohésion technologies, Inc.] pour l'élaboration d'implants biomédicaux présentant des caractéristiques différentes de biodégradabilité ; EP1000964 A1 (05.11.1999) [Institut Français du Pétrole] pour l'élaboration de matériaux alvéolaires comprenant au moins un polymère thermoplastique, au moins une résine époxyde modifiée et au moins un agent porogène ou le produit de dégradation dudit agent porogène ; EP1436019 B1 (16.10.2001) [Biocomposites Limited Staffordshire] pour un procédé de préparation d'un matériau biodégradable destiné à des applications médicales ; EP1520593 B1 (30.09.2003) [ADC Advanced DentalL Care GmbH & CO KG] pour un procédé de production d'un matériau de substitution osseuse en utilisant au moins un agent porogène ; EP2228127A1 (27.02.2009) [Commission à l'Energie Atomique et aux Energies Alternatives] pour un procédé de préparation de particules de silice poreuses en utilisant un agent porogène soluble dans l'eau, ledit agent porogène étant ensuite éliminé par dissolution.

Cette technologie est globalement difficile à mettre en oeuvre dans la mesure où l'utilisation des matériaux intrinsèquement poreux exige une étape de stérilisation ou d'épuration préalable pour en éliminer les éléments indésirables qui se trouvent dans les pores. De même l'utilisation des porogènes exige une bonne connaissance des moyens de leur élimination de la structure, ce qui peut être une opération lourde et risquée pour la cohésion du matériau porosifié obtenu.

Plus couramment l'homme du métier utilise des procédés d'incorporation des substances actives, tant solides que liquides, dans les matériaux supports directement, lors de l'élaboration desdits matériaux. C'est par exemple l'objet revendiqué dans certaines demandes de brevet.

EP0529976 A1 (22.08.1991) [EI. DU PONT DE NEMOURS AND COMPANY] divulgue la composition de particules à relargage lent d'herbicides, obtenues en mélangeant directement : une à trois espèces d'herbicides ; de la cire de paraffine ; un ou plusieurs polymère(s) naturel(s) ou de synthèse ayant un squelette hydrocarboné et une charge solide particulière. Ledit mélange est mis en forme par les techniques connues de l'homme du métier.

EP2226309 A1 (04.03.2009) [Daniela STERNINI] divulgue une composition agricole préparée en mélangeant directement : un polymère superabsorbant ; un matériau hygroscopique d'origine végétale ; un plastifiant naturel et des fertilisants et/ou des pesticides, ainsi que d'autres additifs habituellement utilisés en agriculture.

EP2718245 A1 (13.06.2011) [UAB « ARVI » ir ko] divulgue un procédé de production de mélange de fertilisants - *azote, phosphore et potassium* (NPK) - granulé, ledit mélange comprenant des composants solides mélangés et broyés dans un mixeur, humidifiés avec de l'eau et/ou de la vapeur d'eau, granulés, séchés, fractionnés dans un mixeur et conditionnés.

Il est aussi courant de charger les granulés en principe actifs après leur mise en forme. C'est par exemple le brevet BRPI0817715 A2 (30.09.2014) [OMS INVESTIMENTS INC.] qui divulgue un procédé particulier qui consiste à préparer des granulés pour le contrôle des mauvaises herbes dont les ingrédients herbicides sont appliqués sur la surface desdits granulés par enrobage. Le granulé dont le matériau de base n'a aucune fonction active, sert de support qui se désagrège lorsqu'il est mouillé pour libérer les herbicides.

Pour améliorer l'homogénéité de la répartition des actifs dans les supports selon les procédés décrits, les matériaux sont réduits en poudre lors du mélange avant la mise en forme des produits finis généralement par granulation. On peut citer en exemple des documents qui décrivent cette technologie.

EP0880995 A2 (28.05.1998) [Morimoto, Kiyoshi Shizuoka] divulgue une méthode et un dispositif de granulation de matériau en poudre. Ce procédé qui permet de mélanger la poudre du matériau support avec la solution active avant granulation est très complexe. Il en est de même de l'appareil et du procédé permettant de produire des granulés en forme de perles à partir d'une poudre, décrits par EP0227508 A2 (10.08.1988) [DOW CHEMICAL CO]. On a d'ailleurs autant de complexité pour le procédé et le système de granulation de poudre décrits par CA2844198 (27.02.2014) [FORSYTHE & LONG INGINERING].

Ces procédés traitant des poudres chargées de compositions actives nécessairement avant la granulation présentent plusieurs désavantages. Lesdits procédés sont complexes à réaliser. En plus de la complexité de leur processus de réalisation, lesdits procédés présentent les mêmes inconvénients techniques que ceux mettant en oeuvre des porogènes précédemment décrits. Tous ces procédés fournissent des produits finis prêts à l'emploi qui, économiquement, présentent le lourd désavantage de ne pouvoir être adaptables à une demande inopinée arrivant après l'élaboration des supports chargés, concernant une utilisation particulière ou un changement de définition d'objectifs à atteindre par l'utilisateur. Les supports chargés issus de ces technologies étant d'utilisation restreinte à un objet précis, les produits d'une campagne, non utilisés pour cause de surproduction ou du fait d'un changement inattendu d'objectifs après commande, peuvent être voués en principe à une destruction en pure perte.

L'objet de la présente invention est donc un procédé d'élaboration d'un matériau composite biodégradable non poreux rendu hydro- et/ou lipo-absorbant servant à l'obtention d'objets solides mis en formes diverses servant de matière première à charger à postériori en compositions actives liquides hydrophiles et/ou lipophiles comprenant au moins un principe actif destiné à être délivré de manière contrôlée et continue dans un milieu, ledit procédé comprenant les étapes suivantes :
***a)*** Choisir la matière solide de base ou du mélange de plusieurs matières solides de base d'origine naturelle ou de synthèse ;
***b)*** Mélanger la matière solide de base obtenue en *a)* avec les co-formulants solides de cohésion et les coabsorbants solides ;
***c)*** Réduire en poudre le mélange des matières solides obtenu en *b)*.;
***d)*** Humidifier le mélange obtenu en *c)* à un taux compris entre 9 % et 13,5 % ;
***e)*** Ajouter les co-formulants liquides de cohésion et les coabsorbants liquides au mélange humidifié en *d)* pour obtenir une poudre fine ou d'une semoule ;
***f)*** Stocker ladite poudre fine ou ladite semoule obtenue en *e)* pour sa maturation ;
***g)*** Mettre en forme ladite poudre fine ou ladite semoule issue de l'étape ***f)*** en objets solides non poreux hydro- et/ou lipo-absorbants ;
***h)*** Stocker les objets solides non poreux hydro- et/ou lipo-absorbants obtenus en *g)* en containers étanches à l'humidité ;
***i)*** Incorporer à postériori au moins une composition active liquide ou rendue telle, lipophile ou hydrophile, dans lesdits objets solides non poreux issus de l'étape *h*) pour obtenir des objets solides actifs ;
***j*)** Enrober le cas échéant les objets solides actifs obtenus en *i)* ;
***k)*** Stocker les objets solides actifs obtenus en *i)* ou le cas échéant en *j)* dans des containers étanches.

De manière surprenante, les objets solides obtenus à partir du matériau composite non poreux absorbent des compositions actives liquides hydro- et/ou lipophiles grâce à l'addition des coabsorbants qui forment un réseau de mèches hydro-et/ou lipo-absorbantes dans la masse dudit matériau. Les coabsorbants solides sont des polymères biodégradables, d'origine naturelle ou non. Ils sont choisis parmi des polysaccharides, des gommes naturelles ou un mélange de ceux-ci.

Le procédé selon l'invention est discontinu, dans la mesure où il comporte des étapes de stockage qui sont des étapes de rupture partielle du processus. En effet :
- l'étape f) de stockage de la poudre fine ou de la semoule s'impose pour sa maturation qui permet de compléter l'uniformisation de la répartition des substances liquides dans la masse de poudre ;
- l'étape h) de stockage des objets solides non poreux formés pour favoriser une gestion souple de ces produits intermédiaires au cours des opérations de leur chargement en au moins une composition active liquide qui peut varier pour un même lot d'objets produits.

Les matières solides de base utilisées pour l'obtention du matériau selon l'invention sont choisies parmi les biopolymères lignocellulosiques, glucidiques, protidiques, simples ou en association dans des structures naturelles ou de synthèse.

Selon un aspect de l'invention, les matières d'origine naturelle sont de préférence issues des sous-produits agro-industriels. Il s'agit par exemple, sans pour autant que cette liste soit exhaustive, des tourteaux de tournesol, de soja et de pépins de raisins, mais aussi du marc de café, du son de blé, des rafles de maïs, de la pulpe de betterave, de la farine de blé, de la farine de maïs ou des protéines animales transformées.

Les matières naturelles de base pour l'élaboration du matériau selon l'invention peuvent être choisies parmi les fibres issues de l'industrie textile traitant le miscanthus, le chanvre ou le lin, cette liste n'étant pas exhaustive. Les fibres végétales servent particulièrement à la consolidation du matériau composite selon le procédé de l'invention pour obtenir des objets présentant une grande résistance mécanique.

Conformément à la réalisation de l'invention, les co-formulants solides de cohésion sont choisis parmi les agglomérants comme par exemple les résines végétales, les paraffines, les gommes naturelles comme exemple le Xanthane, le Guar, les dérivés cellulosiques, l'isolat de soja, la caséine, la gélatine ou le mélange de ceux-ci. Ils servent à la tenue et à la consolidation du matériau lors de la mise en forme des objets solides actifs à partir de la poudre et/ou de la semoule des matières de base.

Afin d'optimiser tant le mélange des matières solides que la répartition homogène des matières liquides dans le mélange des matières solides, celles-ci sont réduits en poudre dont la granulométrie des particules varie entre 1 micromètre et 3 millimètres, de préférence entre 10 micromètres et 500 micromètres

L'humidification selon l'invention du mélange des matières solides avant leur réduction en poudre s'impose afin de rendre techniquement possible la mise en forme des objets, particulièrement lorsqu'on utilise des méthodes de pressage qui exigent une humidité comprise entre 9% et 13% pour apporter une plasticité de mise en forme suffisante aux matières solides. L'humidification se fait en tenant compte de l'humidité déjà présente dans ces matières solides pour arriver à des taux compris entre 9% et 13,5%.

Conformément à l'invention, les coabsorbants permettant l'absorption des compositions actives liquides lipophiles par affinité sont choisis parmi les substances liquides lipophiles pouvant être des huiles d'origine végétale ou d'origine animale, ou des huiles minérales, ainsi qu'un mélange de ceux-ci.

Conformément à l'invention, les coabsorbants permettant l'absorption des compositions actives liquides hydrophiles par affinité sont choisis parmi les substances liquides amphiphiles choisis parmi le glycérol, les alcools à longue chaîne carbonée ou les solvants organiques couramment utilisés et connus de l'homme du métier ou le mélange de ceux-ci compatibles avec les compositions actives liquides et qui ne participent pas à une augmentation de l'humidité des matières solides malgré leur caractère hydrophile.

Selon un mode de réalisation de l'objet de l'invention, un ou plusieurs coabsorbants lipophiles et un ou plusieurs coabsorbants hydrophiles peuvent être mélangés dans la même structure qui peut ainsi absorber indifféremment des compositions actives hydrophiles et des compositions actives lipophiles ou un mélange de celles-ci.

Selon un aspect avantageux de l'invention, les coabsorbants sont destinés à la formation d'un réseau de mèches lipophiles et/ou hydrophiles dans la masse du matériau composite biodégradable non poreux pour rendre ledit matériau hydro- et/ou lipo-absorbant, lesdites mèches servant de voies de pénétration ; de diffusion et de libération des compositions actives liquides dans ledit matériau composite biodégradable non poreux.

Selon un mode préféré de réalisation de l'invention, les coabsorbants tant solides que liquides sont adjoints à des taux variant entre 1% et 50% en poids par rapport au poids total du matériau composite biodégradable non poreux hydro- et /ou lipo-absorbant, de préférence entre 5% et 50% en poids. La densité du réseau de mèches absorbantes est proportionnelle au taux de coabsorbants adjoint. C'est par le taux de coabsorbants que la quantité de composition active liquide à absorber peut être limitée, cette quantité conditionne proportionnellement le débit et la durée de délivrance de ladite composition active. Cette limite est établie expérimentalement en fonction de la nature du matériau composite biodégradable non poreux, de la nature des coabsorbants ainsi que de la nature de la composition active liquide absorbée.

Selon un mode de réalisation de l'invention, les objets solides absorbants, selon leur utilisation, peuvent être mis en forme de pellets ou de granulés de dimensions variant entre 2 millimètres et 1 centimètre de diamètre, pour 2 millimètres à 4 centimètres de long. Ils peuvent également être mis en forme de plaques de 10 centimètres à 1 mètre de côté, ou de polyèdres.

La mise en forme desdits objets selon l'invention est réalisée par pressage à haute pression, par thermopressage, par pressage de granulation ou par extrusion granulation de la poudre fine ou de la semoule, à des températures tenant compte de la température de dégradation des composants de ladite poudre fine ou ladite semoule.

Lesdits objets hydro- et/ou lipo-absorbants élaborés selon le procédé de l'invention constituent une matière première stockable, utilisable à souhait et selon les besoins pour la production à façon d'objets finis chargés en compositions actives liquides ou rendues telles, de nature hydrophile ou lipophile et servant en général de diffuseurs localisés à relargage contrôlé.

Le chargement en composition active liquide des objets solides absorbants selon l'invention se fait par différents procédés connus de l'homme du métier, avec la possibilité de les réaliser sous vide, à savoir :
- par pulvérisation de la composition active liquide sur les objets solides absorbants sous agitation de mélange dans un dispositif de préférence fermé ;
- par imbibition de courte durée des objets solides absorbants dans la composition active liquide par apports successifs de petites quantités de ladite composition active liquide dans le dispositif d'imbibition sous agitation.

Les quantités de composition active liquide contenant au moins un principe actif absorbées dans les objets solides absorbant selon le mode de réalisation de l'invention varient de 5% à 50% en poids par rapport au poids de l'objet solide actif.

Avantageusement, la composition active liquide contenant au moins un principe actif absorbée dans les objets solides selon l'invention est ainsi mise à l'abri des effets des différents facteurs physiques, chimiques ou biologiques. Elle reste stable tant qualitativement que quantitativement pendant le stockage desdits objets solides actifs, assurant ainsi une grande fiabilité à l'utilisation.

Les compositions actives liquides contiennent au moins un actif dissous dans un solvant lipophile ou hydrophile. Selon la fonctionnalité recherchée conformément à l'invention, lesdits principes actifs sont choisis parmi les engrais, les biostimulants, les substances phytosanitaires, les herbicides, les biocides, les fongicides, les bactéricides, les insecticides, les insectifuges, les attractifs, les répulsifs, les phéromones, les antiparasites, les anti-nuisibles, les rodenticides, les parfums, les huiles essentielles, les extraits de plantes ou un mélange de ceux-ci.

La composition active liquide incorporée dans l'objet actif en matériau non poreux, rendu hydro- et/ou lipo-absorbant selon le procédé de l'invention, va être délivrée par l'objet actif à débit contrôlé et de manière continue. Le débit de libération de la composition active est fonction du taux de « mèches » dans la masse du matériau composite, du taux incorporé de ladite composition active et de la nature du ou des principe(s) la composant. En effet, selon un mode de réalisation de l'invention, les principes actifs peuvent être des molécules lourdes ne pouvant être relarguées par le matériau qu'à la vitesse de migration de son milieu de dissolution, tandis que les molécules volatiles vont être relarguées plus rapidement par évaporation à la surface du support. Ainsi, selon un autre mode de réalisation du procédé de l'invention, l'objet actif portant par exemple des molécules légères est enrobé de préférence dans une fine couche d'une substance possédant un point de fusion compris entre 35 et 80°C, pour un meilleur contrôle du débit de relargage. Cette substance est choisie parmi les paraffines solides à température ambiante, les cires naturelles, les huiles végétales hydrogénées, des graisses végétales ou animales ou encore des polymères synthétiques ou naturels hydrophiles (polyéthers) à longues chaînes. La présence de mèches hydro- et /ou lipophiles au sein de la masse du matériau ne modifie pas sa biodégradabilité.

Les produits finis obtenus selon le procédé de l'invention présentent une dureté et une résistance élevée aux chocs, ce qui s'explique par le fait que leur manipulation ne produit qu'entre 2% et 10% en poids de fines, plus couramment entre 2% et 5% en poids pour les granulés. Les plaquettes par contre n'en produisent quasiment pas. On appelle fines la poudre de matière due aux frottements entre les objets. La résistance des objets actifs peut être renforcée par un enrobage avec de la matière grasse solidifiée.

Selon un aspect de l'invention, les objets obtenus sont de fonctionnalités diverses choisies précisément pour l'objet de leur utilisation. Ils sont en conséquence utilisables en agriculture, en alimentation, en médecine vétérinaire, en élevage, en alimentation animale, en hygiène, en parfumerie, en traitement d'ambiance ou en entretien des espaces verts.

### EXEMPLE 1

### I. FORMULATION DU MATERIAU COMPOSITE

a) Du tourteau de tournesol comme matière de base solide est micronisé dans un mixeur ;
b) 870 grammes de tourteau de tournesol micronisé, titrant 9% d'humidité, sont introduits dans un réacteur ;
c) Après agitation à 500 rpm pendant 5minutes, on y ajoute 29.6 grammes d'eau par petites doses pour un complément d'humidification à 12% d'humidité, toujours sous agitation pendant 5 minutes ;
d) 100 grammes de glycérol comme premier coabsorbant y sont ajoutés toujours sous agitation pendant 5 minutes ;
e) 1 gramme d'huile de ricin comme deuxième coabsorbant est ajouté goutte à goutte, toujours sous agitation ;
f) Le mélange est laissé sous agitation encore 5 minutes, pour obtenir de la poudre qui est stockée dans un container hermétique.

### II. FABRICATION DE GRANULES CYLINDRIQUES

a) La poudre obtenue en ***I.f*** est placée dans la trémie d'alimentation d'une presse à granuler à filière verticale (14-175, Amandus Kahl) de taux de compression PW36 ;
b) On procède au pressage avec une rotation des galets fixée à 40% de la vitesse maximale et une hauteur des couteaux de coupe fixée à 3 centimètres pour obtenir des granulés cylindriques de 1 centimètre de long pour 6 millimètres de diamètre ;
c) Les granulés obtenus sont stockés dans un container hermétique.

### III. INCORPORATION A POSTERIORI DANS LES GRANULES DU PRINCIPE ACTIF : LE METHYL SALICYLATE

a) 85 grammes de granulés obtenus à l'étape précédentes sont introduits dans un réacteur à bain d'huile en verre, agité à 500 rpm et dont la température est fixée à 65°C;
b) 15 grammes de méthyl salicylate (Reagent plus >99%, Sigma Aldrich) sont pulvérisés dans le réacteur toujours sous agitation, par séquences de 5 minutes successives entrecoupées d'une pose;
c) le réacteur est gardé sous agitation à 200 rpm jusqu'à l'incorporation complète du méthyl salicylate. Le chauffage est coupé au bout d'une heure pour un refroidissement à température ambiante ;
d) les granulés sont ensuite tamisés à l'aide d'un tamis métallique de 2,8 mm de maillage. Les particules fines sont évaluées et pesées. Elles sont évaluées à 3,1 % de la masse totale du produit chargé d'actif ;
e) puis les granulés actifs obtenus sont stockés dans un container hermétique.

### EXEMPLE 2

### I. FORMULATION DU MATERIAU COMPOSITE

a) 900 grammes de protéines animales transformées (P.A.T. Catégorie 3) titrant 10% d'humidité, comme matière solide de base, sont mélangés dans un mixeur avec 50 grammes de tourteau de pépins de raisin titrant 11% d'humidité comme co-formulant solide, puis le mélange est micronisé ;
b) Puis le mélange solide micronisé obtenu en a) est mis dans un réacteur ;
c) Après agitation à 500 rpm pendant 5 minutes, on y ajoute 50 grammes de digestat liquide comprenant 4% de matière sèche par petites doses comme humidifiant, toujours sous agitation pendant 5 minutes ;
d) 100 grammes de glycérol comme premier coabsorbant y sont ajoutés toujours sous agitation pendant 5 minutes ;
e) 1 gramme d'huile de colza comme deuxième coabsorbant est ajouté goutte à goutte, toujours sous agitation ;
f) Le mélange est laissé sous agitation encore 5 minutes, pour obtenir de la poudre qui est stockée dans un container hermétique.

### II. FABRICATION DE GRANULES CYLINDRIQUES

a) La poudre obtenue en ***I.f*** est placée dans la trémie d'alimentation d'une presse à granuler à filière verticale (14-175, Amandus Kahl) de puissance de compression PW38 ;
b) On procède au pressage avec une rotation des galets fixée à 40% de la vitesse maximale et une hauteur des couteaux de coupe fixée à 3 centimètres pour obtenir des granulés cylindriques de 1 centimètre de long pour 6 millimètres de diamètre ;
c) Les granulés obtenus sont stockés dans un container hermétique.

### III. INCORPORATION DANS LES GRANULES DE DIGESTAT LIQUIDE COMME COMPOSITION ACTIVE

a) 70 grammes de granulés obtenus à l'étape précédente sont introduits dans un réacteur en verre agité à 500 rpm ;
b) 30 grammes de digestat liquide sont pulvérisés dans le réacteur toujours sous agitation, par séquences de 5 minutes successives entrecoupées d'une pose;
c) le réacteur est gardé sous agitation à 200 rpm jusqu'à incorporation complète du digestat ;
d) les granulés sont ensuite tamisés dans un tamis de 2,8 mm de maillage. La poudre fine est récupérée et pesée. Elle représente 4,1 % de la masse totale du produit chargé ;
e) puis les granulés actifs obtenus sont stockés dans un container hermétique.

## Revendications

1. Procédé d'élaboration d'un matériau composite biodégradable non poreux rendu hydro- et/ou lipo-absorbant servant à l'obtention d'objets solides mis en formes diverses pour être chargés à postériori en compositions actives hydrophiles et/ou lipophiles liquides comprenant au moins un principe actif destiné à être délivré de manière contrôlée et continue dans un milieu, ***caractérisé en ce* qu'il** comporte les étapes suivantes :
**a)** Choisir de la matière solide de base ou du mélange de plusieurs matières solides de base, d'origine naturelle ou de synthèse ;
**b)** Mélanger la matière solide de base obtenue en *a)* avec les co-formulants solides de cohésion et les coabsorbants solides ;
**c)** Réduire en poudre le mélange des matières solides obtenu en *b)*;
**d)** Humidifier le mélange obtenu en *c)* à un taux compris entre 9 % et 13,5 %;
**e)** Ajouter les co-formulants liquides de cohésion et les coabsorbants liquides au mélange humidifié en *d)* pour obtenir une poudre fine ou d'une semoule ;
**f)** Stocker ladite poudre fine ou ladite semoule obtenue en *e)* pour sa maturation;
**g)** Mettre en forme ladite poudre fine ou ladite semoule issue de l'étape *f)* en objets solides non poreux hydro- et/ou lipo-absorbants ;
**h)** Stocker les objets solides non poreux hydro- et/ou lipo-absorbants obtenus en g) en containers étanches à l'humidité ;
**i)** Incorporer à postériori au moins une composition active liquide ou rendue telle, lipophile ou hydrophile, dans lesdits objets solides non poreux issus de l'étape *h)* pour obtenir des objets solides actifs ;
**j)** Enrober le cas échéant les objets solides actifs obtenus en *i)* ;
**k)** Stocker des objets solides actifs obtenus en *i)* et le cas échéant en *j)* dans des containers étanches.

2. Procédé selon la revendication 1 ***caractérisé en ce que*** les matières solides de base sont des biopolymères lignocellulosiques, glucidiques et protidiques libres ou en association dans des structures naturelles ou de synthèse.

3. Procédé selon l'une des revendications 1 ou 2 ***caractérisé en ce que*** les matières solides de base sont des sous-produits agro-industrielles choisies parmi des tourteaux de tournesol, de soja ou de pépins de raisins, de la rafle de maïs, du marc de café, du son de blé, de la pulpe de betterave, de la farine de blé, de la farine de maïs, des protéines animales transformées ou un mélange de ceux-ci.

4. Procédé selon l'une des revendications 1 ou 2 ***caractérisé en ce que*** les matières solides de base naturelles sont des fibres végétales de miscanthus, de chanvre, de lin ou un mélange de celles-ci..

5. Procédé selon l'une quelconque des revendications précédentes ***caractérisé en ce que*** les co-formulants solides de cohésion sont des résines végétales, des paraffines, des gommes naturelles, des dérivés cellulosiques, de l'isolat de soja, de la caséine, de la gélatine ou un mélange de ceux-ci.

6. Procédé selon l'une quelconque des revendications précédentes ***caractérisé en ce que*** les coabsorbants solides sont des polymères biodégradables, d'origine naturelle ou non, présentant une affinité avec la composition active liquide à absorber.

7. Procédé selon l'une quelconque des revendications précédentes ***caractérisé en ce que*** les coabsorbants solides sont des polysaccharides, des gommes naturelles ou un mélange de ceux-ci.

8. Procédé selon l'une quelconque des revendications précédentes ***caractérisé en ce que*** les coabsorbants sont des substances liquides amphiphiles choisies parmi le glycérol ou les alcools à longue chaine carbonée compatibles avec la composition active liquide à absorber, ou un mélange de ceux-ci.

9. Procédé selon l'une quelconque des revendications précédentes ***caractérisé en ce que*** les coabsorbants sont des substances liquides lipophiles choisies parmi des huiles d'origine végétale ou animale, des huiles minérales, ou un mélange de ceux-ci.

10. Procédé selon l'une quelconque des revendications précédentes ***caractérisé en ce que*** les coabsorbants sont adjoints dans la poudre ou dans la semoule à des taux variant entre 1% et 50% en poids par rapport au poids total dudit matériau composite biodégradable non poreux.

11. Procédé selon l'une quelconque des revendications précédentes ***caractérisé en ce que*** les coabsorbants sont destinés à la formation d'un réseau de mèches absorbantes hydrophiles et/ou lipophiles dans la masse dudit matériau composite biodégradable non poreux.

12. Procédé selon l'une quelconque des revendications précédentes ***caractérisé en* ce *que*** les mèches hydrophiles et/ou lipophiles servent de voies de pénétration de ladite composition active liquide ou rendue telle, hydrophile ou lipophile, dans ledit matériau composite biodégradable non poreux.

13. Objets actifs en matériau composite biodégradable non poreux hydro- et/ou lipo-absorbant selon l'une quelconque des revendications précédentes ***caractérisés en ce qu***'ils sont en forme de granulés de dimensions variant entre 2 millimètres et 1 centimètre de diamètre pour 2 millimètres à 4 centimètres de long.

14. Objets actifs selon la revendication 13 ***caractérisés en* ce *qu***'ils sont en forme de plaques de 10 centimètres à 1 mètre de côté, ou de polyèdres.

15. Objets actifs selon l'une quelconque des revendications 13 ou 14 ***caractérisés en ce* qu'**ils sont chargés en compositions actives liquides comprenant au moins un principe actif ayant la fonction d'engrais, de biostimulant, de substance phytosanitaire, d'herbicide, de biocide, d'insecticide, d'insectifuge, d'attractif, de répulsif, de phéromone, d'antiparasitaire, d'anti-nuisibles, de rodenticide, de parfum, d'huile essentielle, d'extrait de plante ou un mélange de ceux-ci.

16. Objets actifs selon l'une des revendications 13 à 15 ***caractérisés en ce que*** le taux de compositions actives liquides absorbées varie entre 5% et 50% en poids par rapport au poids des objets actifs.

17. Utilisation des objets actifs selon l'une quelconque des revendications précédentes en agriculture, en alimentation humaine ou animale, en élevage, en médecine vétérinaire, en hygiène, en parfumerie, en traitement d'ambiance ou en entretien des espaces verts.

## Patentansprüche

1. Verfahren zum Herstellen eines nicht porösen, biologisch abbaubaren Verbundmaterials, das hydro- und/oder lipoabsorbierend gemacht wird, um feste Gegenstände zu erhalten, die auf verschiedene Weise geformt sind, um anschließend mit hydrophilen und/oder lipophilen,flüssigen aktiven Zusammensetzungen beschickt zu werden, die mindestens einen Wirkstoff umfassen, der dazu bestimmt ist, kontrolliert und kontinuierlich in ein Medium abgegeben zu werden, **dadurch gekennzeichnet, dass** es die folgenden Schritte umfasst:
a) Auswählen eines festen Grundmaterials oder einer Mischung aus mehreren festen Grundmaterialiennatürlichen oder synthetischen Ursprungs;
b) Vermischen des untera) erhaltenen festen Grundmaterials mit den festen kohäsiven Beistoffenund den festen Co-Absorbern;
c) Vermahlen derunter b) erhaltenenMischung aus festem Material zu Pulver;
d) Anfeuchten der unter c) erhaltenenMischungauf einen Gehalt zwischen 9 % und 13,5 %;
e) Zugeben der flüssigen kohäsiven Beistoffeund flüssigen Co-Absorber zu der in d) angefeuchteten Mischung, um ein feines Pulver oder Grieß zu erhalten;
f) Lagern des in e) erhaltenen feinen Pulvers oder Grießes zum Reifen;
g) Formen des feinen Pulvers oder Grießes aus Schritt f) zu hydro- und/oder lipoabsorbierenden, nichtporösen, festen Gegenständen;
h) Lagern der hydro- und/oder lipoabsorbierenden, nichtporösen, festen Gegenstände, die in g) erhalten wurden, in wasserdichten Behältern;
i) anschließend Einbringen von mindestens einer lipophilen oder hydrophilen, flüssigen oder flüssig gemachten aktiven Zusammensetzung in die nichtporösen, festen Gegenstände, die aus Schritt h) resultieren, um aktive feste Gegenstände zu erhalten;
j) Beschichten, falls erforderlich, der unter i) erhaltenen festen aktiven Gegenstände;
k) Lagern der aktiven festen Gegenstände aus i) und ggf. j) in wasserdichten Behältern.

2. Verfahren nach Anspruch 1, **dadurch gekennzeichnet, dass** die festen GrundmaterialienLignocellulose-, Kohlenhydrat- und Proteinbiopolymere sind, die frei oder assoziiert in natürlichen oder synthetischen Strukturen vorliegen.

3. Verfahren nach einem der Ansprüche 1 oder 2, **dadurch gekennzeichnet, dass** die festen Grundmaterialien agroindustrielle Nebenprodukte sind, ausgewählt aus Sonnenblumen-, Soja- oder Traubenkernpresskuchen, Maiskolben, Kaffeesatz, Weizenkleie, Rübenpulpe, Weizenmehl, Maismehl, verarbeiteten tierischen Proteinen oder einer Mischung davon.

4. Verfahren nach einem der Ansprüche 1 oder 2, **dadurch gekennzeichnet, dass** die natürlichen festen Grundmaterialienpflanzliche Fasern aus Miscanthus, Hanf, Flachs oder einer Mischung davon sind.

5. Verfahren nach einem der vorhergehendenAnsprüche, **dadurch gekennzeichnet, dass** die festen kohäsiven Beistoffepflanzliche Harze, Paraffine, natürliche Gummis, Cellulosederivate, Sojaisolat, Kasein, Gelatine oder eine Mischung davon sind.

6. Verfahren nach einem der vorhergehendenAnsprüche, **dadurch gekennzeichnet, dass** die festen Co-Absorber biologisch abbaubare Polymere natürlichen oder nicht natürlichen Ursprungs sind, die eine Affinität zu der zu absorbierenden, flüssigen aktiven Zusammensetzung aufweisen.

7. Verfahren nach einem der vorhergehenden Ansprüche, **dadurch gekennzeichnet, dass** die festen Co-Absorber Polysaccharide, natürliche Gummis oder eine Mischung davon sind.

8. Verfahren nach einem der vorhergehendenAnsprüche, **dadurch gekennzeichnet, dass** die Co-Absorber amphiphile flüssige Substanzen sind, die unter Glycerin oder langkettigen Kohlenstoffalkoholen ausgewählt sind, die mit der zu absorbierenden, flüssigen aktiven Zusammensetzung oder einem Gemisch davon kompatibel sind.

9. Verfahren nach einem der vorhergehendenAnsprüche, **dadurch gekennzeichnet, dass** die Co-Absorber lipophile, flüssige Substanzen sind, die unter pflanzlichen oder tierischen Ölen, Mineralölen oder einer Mischung davon ausgewählt sind.

10. Verfahren nach einem der vorhergehenden Ansprüche, **dadurch gekennzeichnet, dass** die Co-Absorber in das Pulver oder den Grieß in einer Menge von 1 bis 50 Gew.-%, bezogen auf das Gesamtgewicht des nicht porösen, biologisch abbaubaren Verbundmaterials, zugegeben werden.

11. Verfahren nach einem der vorhergehendenAnsprüche, **dadurch gekennzeichnet, dass** die Co-Absorber zur Bildung eines Netzwerks von hydrophilen und/oder lipophilen, absorbierenden Strängen in der Masse des nichtporösen, biologisch abbaubaren Verbundmaterials bestimmt sind.

12. Verfahren nach einem der vorhergehendenAnsprüche, **dadurch gekennzeichnet, dass** die hydrophilen und/oder lipophilen Stränge als Penetrationswege für diehydrophilen oder lipophilen,flüssigen oder flüssig gemachten aktiven Zusammensetzungen in das nichtporöse, biologisch abbaubare Verbundmaterial dienen.

13. Aktive Gegenstände aus hydro- und/oder lipoabsorbierendem, nicht porösem, biologisch abbaubarem Verbundmaterial nach einem der vorhergehenden Ansprüche, **dadurch gekennzeichnet, dass** sie in Form von Granulaten mit Abmessungen zwischen 2 mm und 1 cm Durchmesser und einer Länge von 2 mm bis 4 cm vorliegen.

14. Aktive Gegenstände nach Anspruch 13, **dadurch gekennzeichnet, dass** sie in Form von Platten von 10 Zentimetern mit1 Meter Seite oder Polyeder vorliegen.

15. Aktive Gegenstände nach einem der Ansprüche 13 oder 14, **dadurch gekennzeichnet, dass** sie mit flüssigen aktiven Zusammensetzungen beladen sind, die mindestens einen Wirkstoff mit der Funktion eines Düngemittels, Biostimulans, Pflanzenschutzmittels, Herbizids, Biozids, Insektizids, Insektenabschreckmittels, Lockmittels, Abwehrmittels, Pheromons, Antiparasitenmittels, Schädlingsbekämpfungsmittels, Rodentizids, Parfüms, ätherischen Öls, Pflanzenextrakts oder einer Mischung davon enthalten.

16. Aktive Gegenstände nach einem der Ansprüche 13 bis 15, **dadurch gekennzeichnet, dass** der Anteil der absorbierten, flüssigen aktiven Zusammensetzungen zwischen 5 und 50 Gew.-%, bezogen auf das Gewicht der aktiven Gegenstände, schwankt.

17. Verwendung von aktiven Gegenständen gemäß einem der vorhergehenden Ansprüche in der Landwirtschaft, in Lebens- und Futtermitteln, in der Tierhaltung, in der Veterinärmedizin, in der Hygiene, in der Parfümerie, in der Umweltbehandlung oder in der Pflege von Grünflächen.

## Claims

1. A method of making a non-porous biodegradable composite material that is made water-absorbent and/or lipid-absorbent for obtaining diversely shaped solid objects and to be subsequently loaded with active liquid hydrophilic and/or lipophilic compositions comprising at least one active ingredient intended to be delivered into an environment in a controlled and continuous manner, **characterized in that** it comprises the following steps:
a) select a base solid material or a mixture of a plurality of base solid materials of natural or synthetic origin;
b) mix the base solid material obtained in a) with a solid cohesion co-formulant or a solid coabsorbant.
c) pulverize the mixture of solid materials obtained in b);
d) wet the mixture obtained in c) at a level between 9% and 13.5%;
e) add a liquid cohesion co-formulant or a liquid coabsorbant to the wetted mixture of d) to get a fine powder or a meal;
f) atock said fine powder or said meal obtained in e) for maturation thereof;
g) shape said fine powder or meal obtained in f) into water-absorbent and/or lipid-absorbent non-porous solid objects;
h) stock the non-porous water-absorbent and/or lipid-absorbent solid objects obtained in g) in moisture-proof sealed containers;
i) subsequently incorporate at least one active liquid, or made liquid, lipophilic or hydrophilic composition in said non-porous solid objects obtained in h) resulting in an active solid object;
j) if applicable, coat the active solid object obtained in i);
k) stock the active solid objects obtained in i) or if applicable in j) in a sealed container.

2. The method according to claim 1, **characterized in that** the base solid materials are lignocellulosic, glucidic, or protidic biopolymers, free or in association in natural or synthetic structures.

3. The method according to any one of claims 1 or 2, **characterized in that** the base solid material is an agro-industrial by-product chosen from sunflower, soy oil cake, grape seed oil cake, corncob, coffee grounds, wheat bran, pulp beet, wheat flour, corn flour, processed animal proteins, or a mixture thereof.

4. The method according to any one of claim 1 or 2, **characterized in that** the natural base solid material is a vegetal fiber from miscanthus, hemp, flax, or a mixture thereof.

5. The method according to any one of the preceding claims, **characterized in that** the solid cohesion co-formulant is a vegetal resin, paraffin, a natural gum, a cellulose derivative, a soy isolate, a casein, a gelatin, or a mixture thereof.

6. The method according to any one of the preceding claims, **characterized in that** the solid coabsorbant is a biodegradable polymer, of a natural origin or not, having an affinity with the active liquid composition to absorb.

7. The method according to any one of the preceding claims, **characterized in that** the solid coabsorbant is a polysaccharide, a natural gum, or a mixture thereof.

8. The method according to any one of the preceding claims, **characterized in that** the coabsorbant is a liquid amphiphilic substance selected from glycerol, a long-carbon chain alcohol compatible with the active liquid composition to absorb, or a mixture thereof.

9. The method according to any one of the preceding claims, **characterized in that** the coabsorbant is a liquid lipophilic substance selected from an oil of a vegetal or animal origin, a mineral oil, or a mixture thereof.

10. The method according to any one of the preceding claims, **characterized in that** the coabsorbant is added into the powder or meal at a level between 1% and 50% by weight relative to the total weight of said non-porous biodegradable composite material.

11. The method according to any one of the preceding claims, **characterized in that** the coabsorbant is intended to form a network of hydrophilic and/or lipophilic absorbing wicks in the mass of said non-porous biodegradable composite material.

12. The method according to any one of the preceding claims, **characterized in that** the hydrophilic and/or lipophilic wicks serve as penetration channels for said active liquid, or made liquid composition, hydrophilic or lipophilic into said non-porous biodegradable composite material.

13. An active object made of a water-absorbent and/or lipid-absorbent non-porous biodegradable composite material according to any one of the preceding claims, **characterized in that** the object is shaped as granules of sizes varying between 2 millimeters and 1 centimeter in diameter and 2 millimeters and 4 centimeters in length.

14. The active object according to claim 13, **characterized in that** it is shaped as plates with edges between 10 centimeters and 1 meter long, or polyhedral.

15. The active object according to any one of 13 or 14, **characterized in that** it is loaded with an active liquid composition comprising at least one active ingredient chosen from a fertilizer, a biostimulant, a plant protection substance, a herbicide, a biocide, aninsecticide, an insect repellent, an attractant, a repellent, a pheromone, an antiparasitic, an anti-pest, a rodenticide, a fragrance, an essential oil, a plant extract, or a mixture thereof.

16. The active object according to any one of claims 13 to 15, **characterized in that** the level of active liquid composition absorbed is between 5% and 50% by weight relative to the weight of active objects.

17. Use of the active object according to any one of the preceding claims in agriculture, human or animal feeding, breeding, veterinary medicine, hygiene, perfumery, ambient air treatment, or maintenance of green spaces.
